# EUROPEAN PATENT APPLICATION

(11) **EP 3 037 499 A1**
(43) Date of publication of application: **29.06.2016**
(21) Application number: 15164300.4
(22) Date of filing: 20.04.2015
(51) Int. Cl.: C09K 17/40, C05D 9/00

(54) **MIXTURE OF TAILINGS FOR APPLICATION IN LIGHT SOIL**

(30) Priority: 22.12.2014 PL 41074314
(71) Applicant: Politechnika Lubelska, 20-618 Lublin (PL); Uniwersytet Przyrodniczy, 20-950 Lublin (PL)
(72) Inventor: Baran, Stanislaw, 20-448 Lublin (PL); Pawlowski, Lucjan, 20-710 Lublin (PL); Wesolowski, Marian, 20-807 Lublin (PL); Pawlowski, Artur, 20-710 Lublin (PL); Kwiatkowski, Zygmunt, 21-003 Ciecierzyn (PL); Zukowska, Grazyna, 20-282 Lublin (PL); Cel, Wojciech, 97-300 Piotrków Trybunalski (PL)
(74) Representative: Kaminski, Piotr

(57) **Abstract**

A mixture of mining tailings for application in light soil, comprising coal-associated shales, municipal sewage sludge and post-consumption mineral wool, characterized with the following composition: coal-associated shales with pH of 6.8 in 1-mole KCl solution, sorption capacity of 12.6 cmol(+) kg⁻¹, total base cations of 12.3 cmol(+) kg⁻¹, saturation of sorption complex with base cations equal to 98%, carbon content of 62.4 g/kg⁻¹, nitrogen content of 2.23g/kg⁻¹, in the amount of 200-500 Mg ha⁻¹; municipal sewage sludge with pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10 Mg ha¹ as well as post-consumed Grodan mineral wool from gardening, with high base cation content amounting to 52.04 cmol(+) kg⁻¹ and high water capacity of 1450% in the amount of 400-500m³ ha⁻¹.

## Description

The object of the present invention is a mixture of mining tailings for application in light soil.

Mining of bituminous coal yields huge amounts of tailings - coal-associated shales, coded 01 04 12. Disposal of this waste mainly involves storing, which creates ecological, economical and social problems. It entails choosing, equipping, and exploiting the deposits, as well as long-range transportation, which generates high costs. These issues inspired the search for a new application of tailings, which involves mixing with other types of waste to form a composite that can be used for improvement of production properties of low-quality soils.

Tailings - comprising coal-associated shales obtained during the mining of bituminous coal are characterized with beneficial petrographic, mineralogical properties, as well as chemical properties. Thus far, studies have shown that tailings can be useful in shaping the properties of soils, especially of low-quality. Heavy metal content in tailings is normative, with low degree of translocation to plants cultivated in the base containing them. This is due to their granulometric and mineralogical composition, which enables sorption of heavy metals, this limiting transfer of the latter to the food chain. This feature suggests that tailings can also be used as a natural heavy metal sorbent in areas with their excessive concentration. Tailings are not radioactive. Concentration of K⁴⁰ (455.22 Bq/kg) is within the acceptable range for soils, whereas the concentrations of Ra²²⁶ (67.87 Bq/kg) and Th²²⁸ (53.61 Bq/kg) do not differ from the ones of other natural minerals, e.g. sands. This rock, when subjected to atmospheric conditions (temperature, humidity) erodes easily, breaking down into fine loamy lamellae. It also breaks up easily after being introduced to soil, especially of light type.

The essence of the mixture containing mining tailings for application in light soil is that it comprises coal-associated shales with pH of 6.8 in 1-mole KCl solution, sorption capacity of 12.6 cmol(+) kg⁻¹, total base cations of 12.3 cmol(+) kg⁻¹ and saturation of sorption complex with base cations equal to 97%, carbon content of 62.4 g/kg⁻¹, nitrogen content of 2.23g/kg⁻¹, in the amount of 200-500 Mg ha⁻¹; municipal sewage sludge with pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10-50 Mg ha¹ as well as post-consumed Grodan mineral wool from gardening, with high base cation content amounting to 52.04 cmol(+) kg⁻¹ and high water capacity of 1450% in the amount of 400-500m³ ha⁻¹.

The main advantage of the invention include: 38-66% decrease in acidification in the fertilized, acidic light soil, 188-246% improvement in its sorption capacity, as well as 395-625% improvement in the degree of saturation with base cations. The content of assimilable phosphorus increases by 385-717%, in case of assimilable potassium - by 214-850%, assimilable magnesium - by 500-1050%, organic substance - 563-638% and nitrogen - by 205-264%. Simultaneously, water retention in soil, lumpy structure and aeration are improved as well. Soil becomes more resistant to such destructive factors as: impact of chemicals, acidification and wind erosion. By improving the chemical and physicochemical properties of light soil, biomass of plant crops increases by 280-626%.

Addition of coal-associated shales, municipal sewage sludge and post-consumption mineral wool to sandy light soil improves its pH and sorption capacity, as well as the content of organic carbon and mineral compounds. Improvement of these properties is significant in comparison to the control sample - soil without additions, and depends on the share of coal-associated shales, sewage sludge and mineral wool.

Rational utilization of the above-mentioned types of waste is an additional advantage of the invention. The method of application was illustrated in the examples of its use.

### Example 1:

A mixture was applied to acidified light soil, which comprised the following: coal-associated shales with pH of 6.8 in 1-mole KCl solution, total base cations of 12.6 cmol(+) kg⁻¹, saturation of sorption complex with base cations equal to 98%, carbon content of 62.4 g/kg⁻¹, nitrogen content of 2.23g/kg⁻¹, in the amount of 200Mg ha⁻¹; municipal sewage sludge with pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10 Mg ha¹ as well as post-consumed Grodan mineral wool from gardening, with high base cation content amounting to 52.04 cmol(+) kg⁻¹ and high water capacity of 1450% in the amount of 400m³ ha⁻¹. The mixture was distributed by means of manure spreader over the area of 1 ha, and then mixed with soil through medium plowing coupled with harrowing prior to sowing. White mustard was used as cover crops.

### Example 2:

A mixture was applied to acidified light soil, which comprised the following: coal-associated shales with pH of 6.8 in 1-mole KCl solution, total base cations of 12.6 cmol(+) kg⁻¹, saturation of sorption complex with base cations equal to 98%, carbon content of 62.4 g/kg⁻¹, nitrogen content of 2.23g/kg⁻¹, in the amount of 300Mg ha⁻¹; municipal sewage sludge with pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10 Mg ha¹ as well as post-consumed Grodan mineral wool from gardening, with high base cation content amounting to 52.04 cmol(+) kg⁻¹ and high water capacity of 1450% in the amount of 500m³ ha⁻¹. The mixture was distributed by means of manure spreader over the area of 1 ha, and then mixed with soil through medium plowing coupled with harrowing prior to sowing. White mustard was used as cover crops.

### Example 3:

A mixture was applied to acidified light soil, which comprised the following: coal-associated shales with pH of 6.8 in 1-mole KCl solution, total base cations of 12.6 cmol(+) kg⁻¹, saturation of sorption complex with base cations equal to 98%, carbon content of 62.4 g/kg⁻¹, nitrogen content of 2.23g/kg⁻¹, in the amount of 400Mg ha⁻¹; municipal sewage sludge with pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10 Mg ha¹ as well as post-consumed Grodan mineral wool from gardening, with high base cation content amounting to 52.04 cmol(+) kg⁻¹ and high water capacity of 1450% in the amount of 500m³ ha⁻¹. The mixture was distributed by means of manure spreader over the area of 1 ha, and then mixed with soil through medium plowing coupled with harrowing prior to sowing. White mustard was used as cover crops.

## Claims

1. mixture of mining tailings for application in light soil, **characterized in that** it consists of coal-associated shales of pH of 6.8 in 1-mole KCl solution, sorption capacity of 12.6 cmol(+) kg⁻¹, total base cations of 12.3 cmol(+) kg⁻¹, saturation of sorption complex with base cations equal to 98%, carbon content of 62.4 g.kg⁻¹, nitrogen content of 2.23g.kg⁻¹, in the amount of 200-500 Mg ha⁻¹; municipal sewage sludge on pH of 6.2 in 1-mole KCl solution, sorption capacity of 33.9 cmol(+) kg⁻¹, total base cations of 29.6 cmol(+) kg⁻¹, and saturation of sorption complex with base cations equal to 87%, carbon content of 199.8 kg⁻¹, with the Cₜₒₜ : Nₜₒₜ ratio of 7.2 in the amount 10 Mg ha¹ as well as post-consumed Grodan mineral wool from gardening, with high base cation content of 52.04 cmol(+) kg⁻¹ and high water capacity of 1450% in the amount of 400-500m³ ha⁻¹.
